# FASCICULE DE BREVET EUROPEEN

(11) **EP 3 795 416 B1**
(45) Date de publication et mention de la délivrance du brevet: **17.08.2022**
(21) Numéro de dépôt: 20196719.7
(22) Date de dépôt: 17.09.2020
(51) Int. Cl.: B60N 2/809, B60N 2/894, B60N 2/821

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 17.09.2019 FR 1910262
(43) Date de publication de la demande: 24.03.2021
(73) Titulaire: TESCA France, 75008 Paris (FR)
(72) Inventeur: GEORGES, Laurent, 75008 Paris (FR)
(74) Mandataire: Sayettat, Julien Christian

(56) Documents cités:
- EP-A1- 3 045 347
- DE-A1-102010 031 048
- DE-A1-102010 041 878
- DE-B3-102007 023 996
- DE-B4-112010 005 658
- US-A1- 2014 182 404

## Description

L'invention concerne un appui-tête de siège de véhicule automobile.

Il est connu de réaliser un appui-tête de siège de véhicule automobile tel que divulgué par exemple par la publication DE 10 2010 041878 A1, ledit appui-tête comprenant :
- deux tiges métalliques parallèles destinées à être montées en haut de dossier dudit siège,
- un boitier en matériau plastique moulé d'absorption d'énergie en cas de choc de la tête d'un passager, ledit boitier présentant deux conduits issus de moulage, chacun desdits conduits recevant une desdites tiges en coulissement de manière à permettre un réglage en hauteur dudit boitier, chacun desdits conduits étant pourvu d'un palier haut et d'un palier bas présentant en leur périphérie deux pattes flexibles opposées selon une première direction, chacun desdits paliers étant pourvu d'un ressort sous forme de fil métallique en acier à ressort replié de manière à présenter une forme générale de U, les branches du U venant en appui sur chacune desdites pattes de manière à pincer lesdites tiges entre lesdites pattes.

Le contact serrant exercé par les paliers sur les tiges permet de limiter les bruits de vibrations, et aussi le risque d'arc-boutement pouvant nuire au bon coulissement du boitier sur lesdites tiges lorsque l'on opère son réglage en hauteur.

Cependant, les ressorts peuvent présenter des dispersions dimensionnelles d'un ressort à l'autre, notamment en termes d'écartement entre leurs branches, ce qui peut conduire à un effort de serrage pouvant varier de façon importante d'un palier à l'autre, et donc à un effort de coulissement différent d'une tige à l'autre et également d'un appui-tête à l'autre.

Notamment, dans le cas d'un rapprochement des branches par rapport à leur écart nominal, on peut générer un pincement excessif pouvant nuire au bon coulissement de la tige concernée.

De plus, les branches des ressorts peuvent, du fait d'un bras de levier de taille trop réduite, subir au fil du temps une déformation permanente pouvant conduire à un affaiblissement de l'effort de pincement au cours de la durée de vie du véhicule.

L'invention a pour but de pallier ces inconvénients.

A cet effet, l'invention propose un appui-tête de siège de véhicule automobile, ledit appui-tête comprenant :
- deux tiges métalliques parallèles destinées à être montées en haut de dossier dudit siège,
- un boitier en matériau plastique moulé d'absorption d'énergie en cas de choc de la tête d'un passager, ledit boitier présentant deux conduits issus de moulage, chacun desdits conduits recevant une desdites tiges en coulissement de manière à permettre un réglage en hauteur dudit boitier, chacun desdits conduits étant pourvu d'un palier haut et d'un palier bas présentant en leur périphérie deux pattes flexibles opposées selon une première direction, chacun desdits paliers étant pourvu d'un ressort sous forme de fil métallique en acier à ressort replié de manière à présenter une forme générale de U, les branches du U venant en appui sur chacune desdites pattes de manière à pincer lesdites tiges entre lesdites pattes,
ledit appui-tête présentant en outre les caractéristiques suivantes :
- les parties extrêmes libres desdites branches sont disposées de manière à pouvoir prendre appui sur des butées issues de moulage dudit palier concerné, afin que lesdites butées puissent reprendre une partie de l'effort de pincement exercé par lesdites branches pour limiter leur appui sur lesdites pattes,
- la partie médiane dudit ressort est disposée à distance de la tige correspondante de sorte que, dans sa zone la plus éloignée de ladite tige, l'écart entre l'axe de ladite tige et l'axe de ladite zone, selon une deuxième direction perpendiculaire à ladite première direction et à la direction d'extension de ladite tige, soit supérieur ou égal à 15 mm.

Dans cette description, les termes de positionnement dans l'espace (haut, bas, longitudinal, transversal, vertical, horizontal, ...) sont pris en référence à un appui-tête monté dans le véhicule.

Avec l'agencement proposé, les parties extrêmes libres des branches étant disposées de manière à pouvoir prendre appui sur les butées, on peut limiter l'effort de pincement exercé par lesdites branches par reprise d'une partie dudit effort par lesdites butées, ce qui est particulièrement pertinent quand les branches sont trop rapprochées l'une de l'autre par rapport à leur écart nominal, ce qui, en l'absence desdites butées, pourrait nuire au bon coulissement de la tige concernée du fait d'un effort de pincement excessif.

Enfin, la partie médiane du ressort étant disposée à distance de la tige correspondante de sorte que, dans sa zone la plus éloignée de ladite tige, l'écart entre l'axe de ladite tige et l'axe de ladite zone selon la deuxième direction soit supérieur ou égal à 15 mm permet de disposer pour les branches d'un bras de levier suffisant pour empêcher au fil du temps une déformation permanente conduisant à un affaiblissement de l'effort de pincement.

D'autres particularités et avantages de l'invention apparaîtront dans la description qui suit, faite en référence aux figures jointes, dans lesquelles :

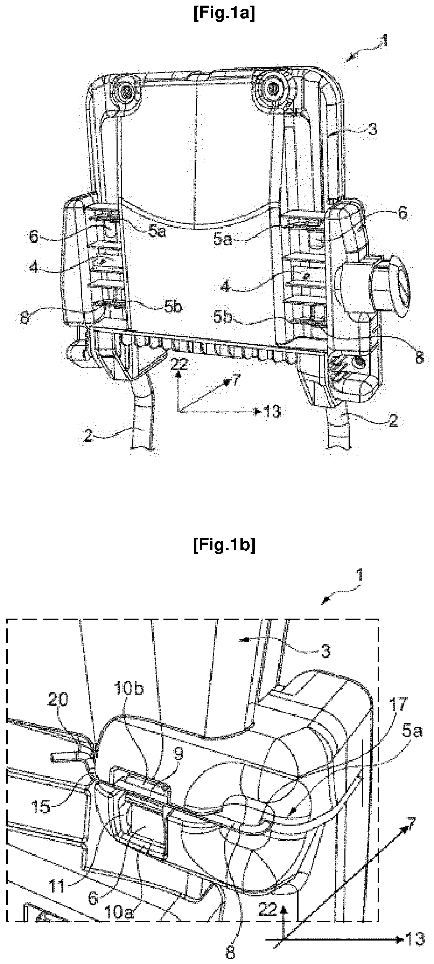

[Fig.1a] est une vue schématique en perspective partielle d'un appui-tête selon une réalisation et
[Fig.1b] en est une vue de détail,

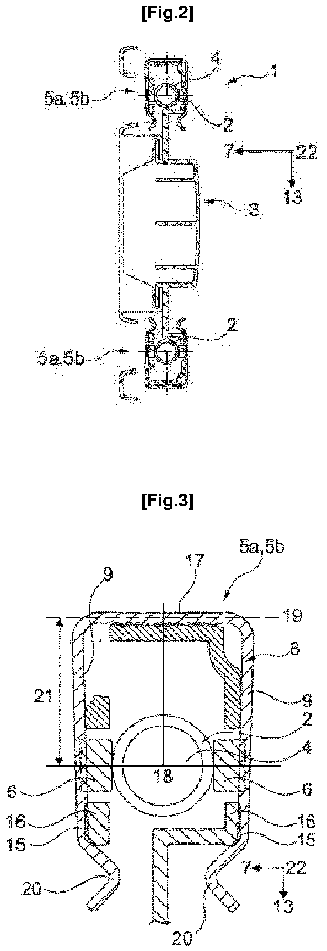

[Fig.2] est une vue en coupe horizontale de l'appui-tête de la figure 1,
[Fig.3] est une vue de détail de la figure 2,

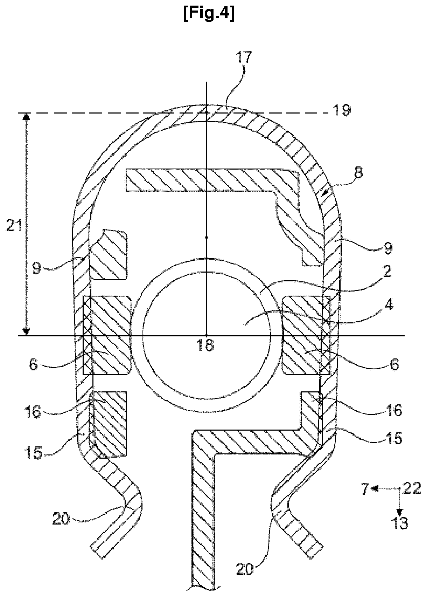

[Fig.4] est une vue analogue à la figure 3 selon une variante de réalisation.

En référence aux figures, on décrit un appui-tête 1 de siège de véhicule automobile, ledit appui-tête comprenant :
- deux tiges 2 métalliques parallèles destinées à être montées en haut de dossier dudit siège,
- un boitier 3 en matériau plastique moulé d'absorption d'énergie en cas de choc de la tête d'un passager, ledit boitier présentant deux conduits 4 issus de moulage, chacun desdits conduits recevant une desdites tiges en coulissement de manière à permettre un réglage en hauteur dudit boitier, chacun desdits conduits étant pourvu d'un palier haut 5a et d'un palier bas 5b présentant en leur périphérie deux pattes flexibles 6 opposées selon une première direction 7, chacun desdits paliers étant pourvu d'un ressort 8 sous forme de fil métallique en acier à ressort replié de manière à présenter une forme générale de U, les branches 9 du U venant en appui sur chacune desdites pattes de manière à pincer lesdites tiges entre lesdites pattes,
ledit appui-tête présentant en outre les caractéristiques suivantes :
- les parties extrêmes libres 15 desdites branches sont disposées de manière à pouvoir prendre appui sur des butées 16 issues de moulage dudit palier concerné, afin que lesdites butées puissent reprendre une partie de l'effort de pincement exercé par lesdites branches pour limiter leur appui sur lesdites pattes,
- la partie médiane 17 dudit ressort est disposée à distance de la tige 2 correspondante de sorte que, dans sa zone la plus éloignée de ladite tige, l'écart 21 entre l'axe 18 de ladite tige et l'axe 19 de ladite zone, selon une deuxième direction 13 perpendiculaire à ladite première direction et à la direction 22 d'extension de ladite tige, soit supérieur ou égal à 15 mm.

Selon la réalisation représentée, les pattes 6 sont reliées au reste du palier 5a,5b par une première extrémité 10a de manière à définir dans ledit palier une fente 11 en forme générale de U permettant la flexion desdites pattes vers l'intérieur pour qu'elles s'appuient selon leur deuxième extrémité 10b sur la tige 2 correspondante.

Selon la réalisation représentée, la première direction 7 s'étend longitudinalement et la deuxième direction 13 transversalement.

Selon la réalisation représentée, les parties extrêmes libres 15 présentent chacune un décroché d'extrémité 20 situé au-delà de la butée 16 correspondante pour s'ancrer dessus et empêcher un retrait non voulu du ressort 8.

Le ressort 8 se monte alors par simple translation avec écartement temporaire des branches 9 qui se repositionnent ensuite en position sensiblement nominale.

Le fil du ressort 8 est par exemple constitué d'un acier à ressort de classe SH et présente par exemple un diamètre 1,4 mm.

Selon la réalisation représentée, les paliers 5a,5b sont moulés d'un bloc avec le boitier 3, ce qui permet d'éviter la fabrication de paliers séparés montés sur ledit boitier.

De façon non représentée, l'appui-tête 1 peut comprendre en outre un dispositif de verrouillage du boitier 3 par rapport aux tiges 2 selon une pluralité de positions verticales, de manière à verrouiller le réglage en hauteur choisi pour ledit boitier, ledit dispositif comprenant :
- une tige 2 crantée pourvue de crans de réglage s'étageant axialement,
- une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

## Revendications

1. Appui-tête (1) de siège de véhicule automobile, ledit appui-tête comprenant :
• deux tiges (2) métalliques parallèles destinées à être montées en haut de dossier dudit siège,
• un boitier (3) en matériau plastique moulé d'absorption d'énergie en cas de choc de la tête d'un passager, ledit boitier présentant deux conduits (4) issus de moulage, chacun desdits conduits recevant une desdites tiges en coulissement de manière à permettre un réglage en hauteur dudit boitier, chacun desdits conduits étant pourvu d'un palier haut (5a) et d'un palier bas (5b) présentant en leur périphérie deux pattes flexibles (6) opposées selon une première direction (7), chacun desdits paliers étant pourvu d'un ressort (8) sous forme de fil métallique en acier à ressort replié de manière à présenter une forme générale de U, les branches (9) du U venant en appui sur chacune desdites pattes de manière à pincer lesdites tiges entre lesdites pattes,
ledit appui-tête étant **caractérisé en ce que** :
• les parties extrêmes libres (15) desdites branches sont disposées de manière à pouvoir prendre appui sur des butées (16) issues de moulage dudit palier concerné, afin que lesdites butées puissent reprendre une partie de l'effort de pincement exercé par lesdites branches pour limiter leur appui sur lesdites pattes,
• la partie médiane (17) dudit ressort est disposée à distance de la tige (2) correspondante de sorte que, dans sa zone la plus éloignée de ladite tige, l'écart (21) entre l'axe (18) de ladite tige et l'axe (19) de ladite zone, selon une deuxième direction (13) perpendiculaire à ladite première direction et à la direction (22) d'extension de ladite tige, soit supérieur ou égal à 15 mm.

2. Appui-tête selon la revendication 1, **caractérisé en ce que** les pattes (6) sont reliées au reste du palier (5a,5b) par une première extrémité (10a) de manière à définir dans ledit palier une fente (11) en forme générale de U permettant la flexion desdites pattes vers l'intérieur pour qu'elles s'appuient selon leur deuxième extrémité (10b) sur la tige (2) correspondante.

3. Appui-tête selon l'une des revendications 1 ou 2, **caractérisé en ce que** la première direction (7) s'étend longitudinalement et la deuxième direction (13) transversalement.

4. Appui-tête selon l'une quelconque des revendications 1 à 3, **caractérisé en ce que** les parties extrêmes libres (15) présentent chacune un décroché d'extrémité (20) situé au-delà de la butée (16) correspondante pour s'ancrer dessus et empêcher un retrait non voulu du ressort (8).

5. Appui-tête selon l'une quelconque des revendications 1 à 4, **caractérisé en ce que** les paliers (5a,5b) sont moulés d'un bloc avec le boitier (3).

6. Appui-tête selon l'une quelconque des revendications 1 à 5, **caractérisé en ce qu'**il comprend en outre un dispositif de verrouillage du boitier (3) par rapport aux tiges (2) selon une pluralité de positions verticales, de manière à verrouiller le réglage en hauteur choisi pour ledit boitier, ledit dispositif comprenant :
• une tige (2) crantée pourvue de crans de réglage s'étageant axialement,
• une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

## Patentansprüche

1. Kopfstütze (1) für Kraftfahrzeugsitz, wobei die Kopfstütze umfasst:
- zwei parallele Metallstangen (2), die dazu bestimmt sind, oben an der Rückenlehne des Sitzes montiert zu werden,
- ein Gehäuse (3) aus geformtem Kunststoffmaterial zur Absorption von Energie im Falle eines Aufpralls des Kopfes eines Insassen, wobei das Gehäuse zwei aus der Formung stammende Leitungen (4) aufweist, wobei jede der Leitungen eine der Stangen gleitend aufnimmt, um eine Höheneinstellung des Gehäuses zu ermöglichen, wobei jede der Leitungen mit einem oberen Lager (5a) und einem unteren Lager (5b) versehen ist, die an ihrer Peripherie zwei entlang einer ersten Richtung (7) gegenüberliegende flexible Laschen (6) aufweisen, wobei jedes der Lager mit einer Feder (8) in Form eines Metalldrahtes aus Stahl mit zusammengeklappter Feder derart versehen ist, um eine allgemeine Form eines U aufzuweisen, wobei die Schenkel (9) des U an jeder der Laschen derart anliegen, um die Stangen zwischen den Laschen einzuklemmen,
wobei die Kopfstütze **dadurch gekennzeichnet ist, dass**:
- die freien Endteile (15) der Schenkel derart angeordnet sind, um sich an aus der Formung des betreffenden Lagers stammende Anschläge (16) anlegen zu können, damit die Anschläge einen Teil der Klemmkraft aufnehmen können, die von den Schenkeln ausgeübt wird, um deren Anlegen an die Laschen zu begrenzen,
- der Mittelteil (17) der Feder auf Abstand zu der entsprechenden Stange (2) angeordnet ist, sodass in der am weitesten von der Stange entfernten Zone die Abweichung (21) zwischen der Achse (18) der Stange und der Achse (19) der Zone in einer zweiten Richtung (13), senkrecht zur ersten Richtung und zur Erstreckungsrichtung (22) der Stange, größer als oder gleich 15 mm ist.

2. Kopfstütze nach Anspruch 1, **dadurch gekennzeichnet, dass** die Laschen (6) mit dem Rest des Lagers (5a, 5b) durch ein erstes Ende (10a) derart verbunden sind, um in dem Lager einen Schlitz (11) in einer allgemeinen Form eines U zu definieren, der die Biegung der Laschen nach innen erlaubt, damit sie sich an ihrem zweiten Ende (10b) an der entsprechenden Stange (2) anlegen.

3. Kopfstütze nach einem der Ansprüche 1 oder 2, **dadurch gekennzeichnet, dass** sich die erste Richtung (7) längs, und die zweite Richtung (13) quer erstreckt.

4. Kopfstütze nach einem der Ansprüche 1 bis 3, **dadurch gekennzeichnet, dass** die freien Endteile (15) jeweils einen Endversatz (20) aufweisen, der sich jenseits des entsprechenden Anschlages (16) befindet, um sich darauf zu verankern, und einen ungewollten Austritt der Feder (8) zu verhindern.

5. Kopfstütze nach einem der Ansprüche 1 bis 4, **dadurch gekennzeichnet, dass** die Lager (5a, 5b) in einem Block mit dem Gehäuse (3) geformt sind.

6. Kopfstütze nach einem der Ansprüche 1 bis 5, **dadurch gekennzeichnet, dass** sie weiter einer Verriegelungsvorrichtung des Gehäuses (3) in Bezug auf die Stangen (2) entlang einer Vielzahl vertikaler Positionen umfasst, um die gewählte Höheneinstellung für das Gehäuse zu verriegeln, wobei die Vorrichtung umfasst:
- eine Zahnstange (2), die mit Einstellkerben versehen ist, die axial stufenförmig angeordnet sind,
- einen Verriegelungsvorsprung, der in Bezug auf das Gehäuse zwischen einer Verriegelungsposition, in der der Vorsprung in eine der Kerben eingreift, und einer Freigabeposition, in der der Vorsprung aus der Kerbe zurückgezogen ist, um das Gleiten der Zahnstange freizugeben, beweglich montiert ist.

## Claims

1. Headrest (1) for a motor vehicle seat, said headrest comprising:
- two parallel metal rods (2) intended to be mounted at the seat back top of said seat,
- a case (3) made of moulded energy absorbing plastic in case of impact of the head of a passenger, said case having two conduits (4) coming from moulding, each one of said conduits receiving one of said rods by sliding in such a way as to allow for an adjusting in height of said case, each one of said conduits being provided with a top bearing (5a) and a low bearing (5b) having at their periphery two opposite flexible tabs (6) according to a first direction (7), each one of said bearings being provided with a spring (8) in the form of a spring steel metal wire folded in such a way as to have a general U shape, the branches (9) of the U bearing on each one of said tabs in such a way as to pinch said rods between said tabs,
said headrest being **characterised in that**:
- the free end portions (15) of said branches are disposed in such a way as to be able to bear against stops (16) coming from the moulding of said bearing concerned, so that said stops can take up a portion of the pinching force exerted by said branches to limit their bearing on said tabs,
- the median portion (17) of said spring is disposed at a distance from the corresponding rod (2) in such a way that, in its zone furthest from said rod, the difference (21) between the axis (18) of said rod and the axis (19) of said zone, according to a second direction (13) perpendicular to said first direction and to the direction (22) of extension of said rod, is greater than or equal to 15 mm.

2. Headrest according to claim 1, **characterised in that** the tabs (6) are connected to the rest of the bearing (5a, 5b) by a first end (10a) in such a way as to define in said bearing a slot (11) in the general shape of a U allowing for the bending of said tabs inwards so that they bear according to their second end (10b) on the corresponding rod (2).

3. Headrest according to one of claims 1 or 2, **characterised in that** the first direction (7) extends longitudinally and the second direction (13) transversally.

4. Headrest according to any of claims 1 to 3, **characterised in that** the free end portions (15) each have an end unhooking (20) located beyond the corresponding stop (16) to be anchored on top and prevent an undesired withdrawal of the spring (8).

5. Headrest according to any of claims 1 to 4, **characterised in that** the bearings (5a, 5b) are integrally moulded with the case (3).

6. Headrest according to any of claims 1 to 5, **characterised in that** it further comprises a device for locking the case (3) with respect to the rods (2) according to a plurality of vertical positions, in such a way as to lock the adjustment in height chosen for said case, said device comprising:
- a notched rod (2) provided with adjusting notches running axially,
- a locking protrusion mounted mobile with respect to said case between a locked position, where said protrusion is inserted into one of said notches, and an unlocked position, where said protrusion is removed from said notch in order to release the sliding of said notched rod.
